Europäisches Patentamt

European Patent Office

Office européen des brevets

(11) Publication number: **0 683 414 A1**

# EUROPEAN PATENT APPLICATION

(21) Application number: 94303628.5

(51) Int. Cl.6: **G02B 26/08**

(22) Date of filing: **20.05.94**

(43) Date of publication of application:
**22.11.95 Bulletin 95/47**

(84) Designated Contracting States:
**DE ES FR GB SE**

(71) Applicant: **STATE OF ISRAEL - MINISTRY OF DEFENCE**
**Armament Development Authority,**
**Rafael,**
**P.O.B. 2250**
**Haifa 31021 (IL)**

(72) Inventor: **Netzer, Yishay**
**Yuvalim 112**
**20124 Israel (IL)**
Inventor: **Fraenkl, Efraim**
**20 Uziel Street,**
**Kiryat Motzkin 26332, (IL)**

(74) Representative: **Price, Paul Anthony King**
**D. Young & Co.,**
**21 New Fetter Lane**
**London EC4A 1DA (GB)**

(54) **Optical scanning apparatus.**

(57) Scanning apparatus including a scanning mirror and a base, wherein the scanning mirror is pivotably mounted on a support which is linearly displaceable relative to the base. The scanning apparatus may also include a variable magnetic field source, mounted on the underside of the scanning mirror, and a fixed magnetic field source mounted on the base and arranged for electromagnetic interaction with the variable magnetic field emitter.

FIG.5

## FIELD OF THE INVENTION

The present invention relates to scanning apparatus generally, and more particularly to a scanning apparatus with dynamic focusing capability.

## BACKGROUND OF THE INVENTION

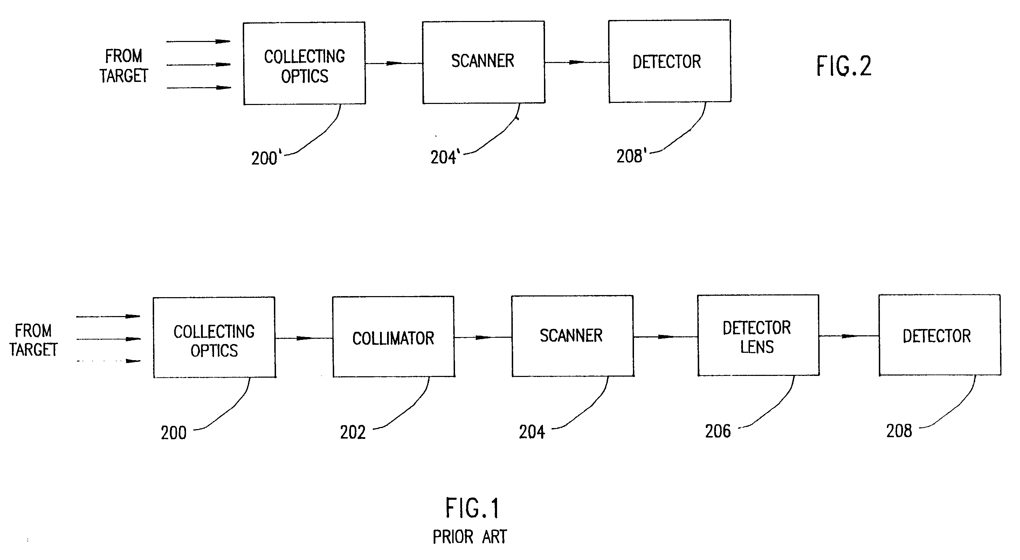

There exist a wide variety of scanning IR imaging systems employing a row of detectors and a scanner. Fig. 1 shows a block diagram of one such prior art scanning system. As shown in Fig. 1, light from a target is collected by a collecting optics 200, and transmitted through a collimator 202 to a scanner 204. The light from the target is reflected by scanner 204 to a detector lens 206 which focuses the light onto a line detector 208. Since line detector 208 can only image one line of the target at a time, scanner 204 is operative to rotate, so that over a period of a single frame the light from the entire target is reflected onto detector 208 by the different positions of scanner 204. Typically, scanner 204 comprises a noding mirror.

In such a system, as is well known by those skilled in the art, the distance traveled by the light between the collecting optics and detector 208 varies from line to line, because the different portions of the focal plane are not equidistant from detector 208. Collimator 202 is therefore required, to ensure that the light from each line of the field of view is in focus when received by detector 208. The provision of a collimator in conjunction with the detector lens, however, is extremely inconvenient in many applications in which considerations of space and weight are paramount. Therefore, the prior art has long sought scanners which are operative with convergent beams and thus obviate the need for collimator 202 and detector lens 206. Three proposed structures are described respectively in the following U.S. Patents: 3,885,857; 4,641,192; and 4,714,310.

U.S. Patent 3,885,857 describes a system wherein defocus compensation is provided for a convergent beam scanner by using a system of flat scanning mirrors rotating about a spaced parallel common axis, instead of a single mirror rotating about its central axis. This system, however, requires a plurality of mirrors, which substantially add to the size, weight, and cost of the scanner.

U.S. Patent 4,641,192 describes a focus-corrected convergent beam scanner including a lens and a mirror annulus arranged behind the lens to reflect light from the scene to a detector. The tilt angle of the reflecting surface of the mirror annulus varies as a function of the position of the reflecting surface along the circumferential axis of the mirror annulus. In this system, however, the linear position of the mirror annulus cannot be adjusted, and therefore, the system will be out of focus unless the detector is located exactly at the focal plane of the lens, or unless the system is provided with an additional detector lens (like detector lens 206) between the scanner and the detector.

U.S. Patent 4,714,310 describes a method and apparatus for dynamic focusing control of a radiant energy beam including a linearly movable plane mirror upon which a beam is directed via a beam splitter and a focusing lens. The plane mirror reflects the beam back through the focusing lens and beam splitter and onto a pivotable mirror, which reflects the beam onto an object. The linear movement of the plane mirror and the pivotal movement of the pivotable mirror are synchronized whereby the beam is focused at the face of the object while scanned across the object. This system, however, requires an additional plane mirror and a beam splitter, which substantially add to the size, weight, and cost of the scanner.

## SUMMARY OF THE INVENTION

It is therefore an object of the present invention to provide a compact, lightweight scanning system which is operative with convergent beams.

It is a further object of the present invention to provide a scanning system which can be focused by adjustment of the position of the scanner, thus eliminating the need for a moving detector lens such as detector lens 206.

In a preferred embodiment, the present invention accomplishes the above described objects by providing a scanner which can dynamically adjust both its rotational orientation relative to its base, and its vertical location relative to its base. Therefore, dynamic focusing can be obtained by adjusting the distance between the collecting optics, and the detector can be maintained as the scanner rotates, thus eliminating the need for collimator 202. Further, static focusing of the image can be performed as well by adjusting a zero position of the scanning mirror in the lateral direction, thus eliminating the need for an additional focusing mechanism.

There is thus provided in accordance with a preferred embodiment of the invention, scanning apparatus comprising a scanning mirror and a base, wherein the scanning mirror is pivotably mounted on a support which is linearly displaceable relative to the base.

Additionally in accordance with a preferred embodiment of the present invention, the scanning apparatus further comprises a variable magnetic field source, mounted on the underside of the scanning mirror, and a fixed magnetic field source, mounted on the base, and arranged for electromagnetic interaction with the variable magnetic field emitter.

Additionally in accordance with a preferred embodiment of the present invention, the scanning apparatus further comprises a mirror position sensor, which provides as output first and second present position signals representative of the present position of the scanning mirror, and position control circuitry, which receives as input the present position signals and first and second command signals and which provides as output first and second new position signals representative of a new desired position for the scanning mirror.

Additionally in accordance with a preferred embodiment of the present invention, the variable magnetic field emitter comprises at least one coil, and the first and second new position signals energize the coil to generate the variable magnetic field.

Additionally in accordance with a preferred embodiment of the present invention, the scanning mirror is mounted on the linearly displaceable support via at least one pivotable assembly, the pivotable assembly comprising a plurality of electrically conductive, mutually isolated segments, and the first and second new position signals are transmitted to the coil via the at least one pivotable assembly.

In accordance with a preferred embodiment of the present invention, the mirror position sensor comprises a conductive element fixed to the mirror and first and second conductive elements fixed to the base, and the first and second present position signals are functionally related to the capacitance between the conductive element fixed to the mirror and the first and second conductive elements fixed to the base, respectively.

In accordance with a preferred embodiment of the present invention, the position control circuitry comprises apparatus for forming, from the first and second present position signals, a height independent value representative of the angular orientation of the scanning mirror relative to the base; apparatus for combining the value representative of the angular orientation with one of the command signals, to form the first new position signal; apparatus for forming, from the first and second present position signals, a tilt independent value representative of the height of the scanning mirror relative to the base from the first and second present position signals; and apparatus for combining the value representative of the height with the other of the command signals, to form the second new position signal.

There is further provided in accordance with a preferred embodiment of the present invention, scanning apparatus comprising a scanning mirror having a front reflecting surface and a back surface, a base spaced from the scanning mirror by a distance, electromagnetic apparatus for deflection of the scanning mirror comprising apparatus for providing angular deflection of the mirror surface with respect to the fixed base and apparatus for adjusting the distance of the scanning mirror from the base.

Additionally in accordance with a preferred embodiment of the present invention, the apparatus for adjusting the distance of the mirror surface from the base comprises at least one cantilever; and the apparatus for providing angular deflection of the mirror surface comprises at least one flexible pivot mounted on the cantilever.

In accordance with a preferred embodiment of the present invention, the electromagnetic apparatus further comprises capacitive apparatus for measuring the angular deflection of the mirror surface with respect to the fixed base, and for measuring the distance of the scanning mirror from the base, the capacitive apparatus comprising apparatus for sensing the change in capacitance between at least one conductive element fixed to the mirror and at least one conductive element fixed to the base.

In accordance with a preferred embodiment of the invention, the electromagnetic apparatus further comprises at least one magnet assembly mounted on the base, at least one coil mounted on the back surface of the scanning mirror, and apparatus for energizing the at least one coil.

In accordance with a preferred embodiment of the present invention, the scanning apparatus further comprises first and second magnet assemblies mounted on the base and first and second coils mounted on the back surface of the scanning mirror, positioned to interact with said first and second magnet assemblies respectively, when energized, wherein the apparatus for providing angular deflection of the mirror surface comprises apparatus for oppositely energizing the first and second coils, and the apparatus for adjusting the distance of the scanning mirror from the base comprises apparatus for identically energizing the first and second coils.

In accordance with a preferred embodiment of the present invention, the scanning apparatus further comprises first and second magnet assemblies mounted on the base, and first and second coils mounted on the back surface of the scanning mirror and positioned to interact with said first and second magnet assemblies, respectively, when energized; wherein the apparatus for providing angular deflection of the mirror surface comprises apparatus for providing a periodic, oppositely directed actuation of the first and second coils, and the apparatus for adjusting the distance of the scanning mirror from the base comprises apparatus for simultaneously providing a periodic, identically directed actuation to the first and second coils, wherein the period of the oppositely directed actuation and the identically directed actuation are related by a constant.

In accordance with a preferred embodiment of the present invention, the apparatus for providing angular deflection comprises apparatus for inducing pivotal vibratory motion of the scanning mirror with a certain period, and the apparatus for adjusting the distance from the base comprises apparatus for simultaneously inducing linear vibratory motion of the scanning mirror in synchronism with the pivotal vibratory motion.

There is further provided in accordance with a preferred embodiment of the present invention, a scanning apparatus, comprising a scanning mirror and a base, wherein the scanning mirror is pivotably and linearly displaceably mounted relative to the base.

BRIEF DESCRIPTION OF THE DRAWINGS

The present invention will be understood and appreciated more fully from the following detailed description, taken in conjunction with the drawings in which:

Fig. 1 is a block diagram of a prior art scanning system;

Fig. 2 is a block diagram of a scanning system constructed in accordance with the present invention.

Fig. 3 is an exploded, pictorial illustration of scanning apparatus constructed and operative in accordance with a preferred embodiment of the present invention;

Fig. 4 is a pictorial illustration of the underside of a mirror forming part of the apparatus of Fig. 3.

Fig. 5 is a partially cutaway pictorial illustration of the assembled scanning apparatus of Figs. 3 and 4;

Fig. 6 is a schematic side view illustration of the scanning apparatus of Figs. 3 and 4.

Fig. 7 is a schematic block diagram of a preferred embodiment of the control circuitry of the scanning apparatus of Figs. 3 and 4;

Fig. 8 is a schematic illustration of a preferred embodiment of the sensor of Fig. 7; and

Fig. 9 is a schematic illustration of a preferred embodiment of the position control circuitry of Fig. 7.

DETAILED DESCRIPTION OF THE PREFERRED EMBODIMENTS

As shown in Fig. 2, in a scanning imaging system according to the present invention, light from a target is collected by a collecting optics 200', and transmitted to a scanner 204', which reflects the light onto a line detector 208'. As will be described in detail below, scanner 204' is able to adjust its linear position relative to line detector 208', and therefore, in contrast to the system of the prior art, the system of the present invention does not require collimator 202 or detector lens 206.

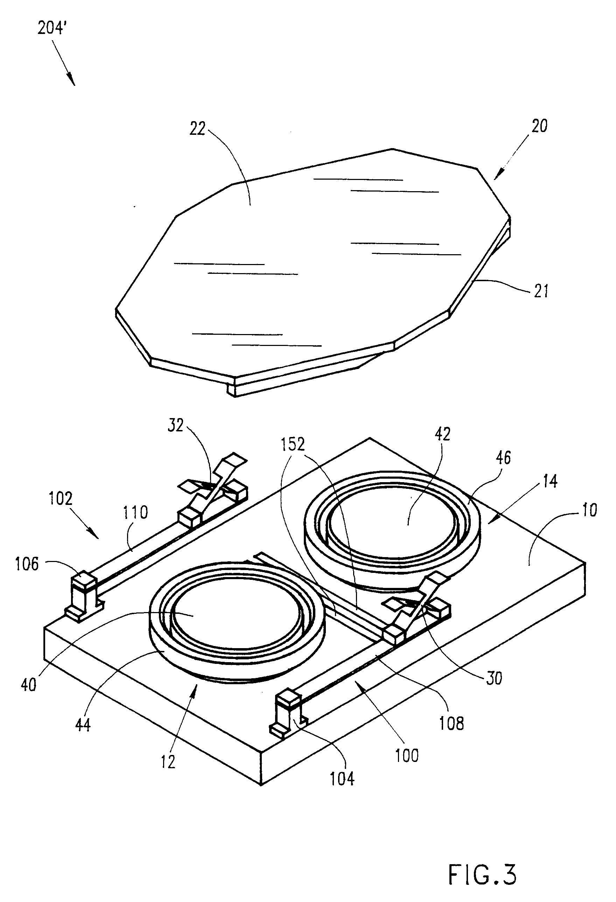

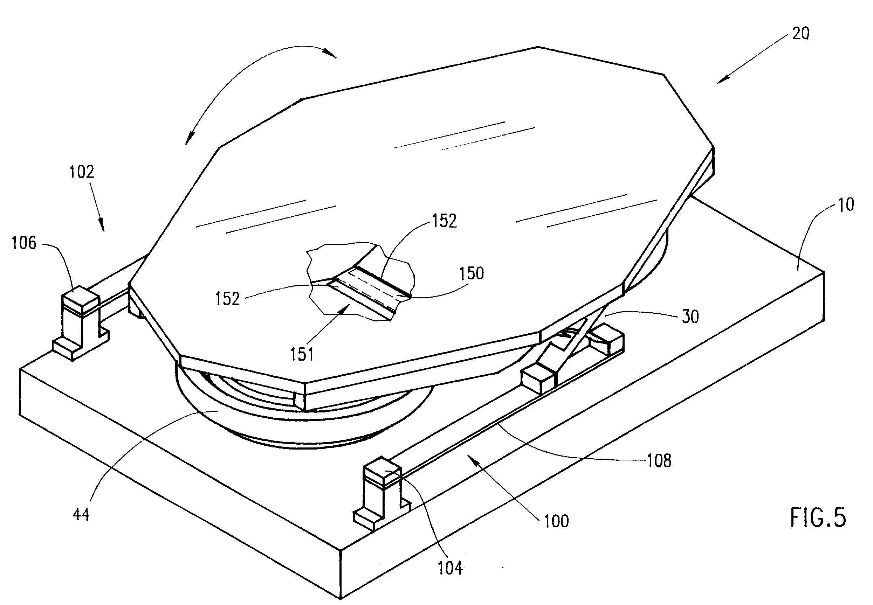

Reference is now made to Figs. 3-6 which illustrate a scanner 204' constructed and operative in accordance with a preferred embodiment of the present invention. As shown in Fig. 3, scanner 204' includes a base 10 preferably formed of an electrically insulative material. Mounted on base 10 are first and second magnet assemblies 12 and 14, which include respective inner pole pieces 40 and 42 and peripheral yokes 44 and 46.

Adjustably mounted onto base 10 is a scanning mirror assembly 20 including a substrate 21 having a reflective top surface 22 and having formed on the underside thereof first and second cylindrical coils 24 and 26 which interact with magnet assemblies 12 and 14, respectively. In a preferred embodiment of the invention, substrate 21 is a ceramic plate including conductors 28 and soldering surfaces 29 which are formed on the underside thereof by thick or thin film hybrid techniques.

The underside of mirror substrate 21 is preferably formed with a reinforcing strip assembly 23, which may be attached thereto by any suitable technique, preferably vapor phase soldering. Preferably, the strip is ceramic to reduce the weight and inertia of the assembly.

Scanning mirror assembly 20 is adjustably mounted onto base 10 via conductive pivot assemblies 30 and 32, and cantilevers 100 and 102. Pivot assemblies 30 and 32 each include two elongated legs which are electrically isolated from each other, and which are soldered to four separate soldering surfaces 29 on the underside of substrate 21. Provision of a number of separately electrically accessible pivot legs allows each pivot assembly to provide a plurality of electrical connections with the underside of substrate 21.

Pivot assemblies 30 and 32 are respectively mounted on cantilevers 100 and 102 which comprise arms 108 and 110 mounted on respective end supports 104 and 106. The combination of pivot assemblies 30 and 32 and cantilevers 100 and 102, allows mirror assembly 20 to change both its rotational orientation relative to base 10, by pivoting on pivot assemblies 30 and 32, and to change its height above base 10, by displacing arms 108 and 110 from their equilibrium positions.

As shown in Fig. 3, in a preferred embodiment, pivot assemblies 30 and 32 are mounted on arms 108 and 110 displaced from end supports 104 and 106. This allows for vertical movement of pivots 30 and 32 (and hence mirror assembly 20) by cantilever movement of arms 108 and 110. Mounting pivot assemblies 30 and 32 substantially off center of cantilevers 100 and 102 decreases the amount of force necessary to displace arms 108 and 110, since the moment arm between mirror assembly 20 and end supports 104 and 106 of cantilevers 100 and 102, is increased.

Coils 24 and 26 interact with assemblies 12 and 14. Current in one direction in coils 24 and 26 causes them to be drawn toward assemblies 12 and 14, respectively, while current in the opposite direction causes coils 24 and 26 to move away from assemblies 12 and 14, respectively. If the currents in the two coils differ, the scanner tilts to the extent that the currents (and hence the forces) are unequal. Additionally, to the extent that the currents are identical and in the same direction, there is a net force up or down which causes deflection of arms 108 and 110 leading to vertical movement of mirror assembly 20. While a particular method of magnetically exerting a force on mirror assembly 20 has been described, it will be appreciated by those skilled in the art that other methods could be employed, for example, the methods described in applicant's Israel patent application serial no. 102,485, entitled "Scanning Apparatus".

As used herein, the term "currents in the same direction" (or "identically directed currents") shall mean currents which cause equal forces to be exerted on coils 24 and 26 in the same direction. It is these currents which cause vertical movement of the mirror. Also, "currents in the opposite direction" (or "oppositely directed currents") shall mean currents which cause equal forces to be exerted on coils 24 and 26 in opposite directions. It is these oppositely directed currents which cause the mirror to tilt.

For an arbitrary pair of currents $I_{24}$ and $I_{26}$ supplied to coils 24 and 26, respectively, the identically directed component equals $1/2 * (I_{24} + I_{26})$ and the oppositely directed component equals $1/2 * (I_{24} - I_{26})$.

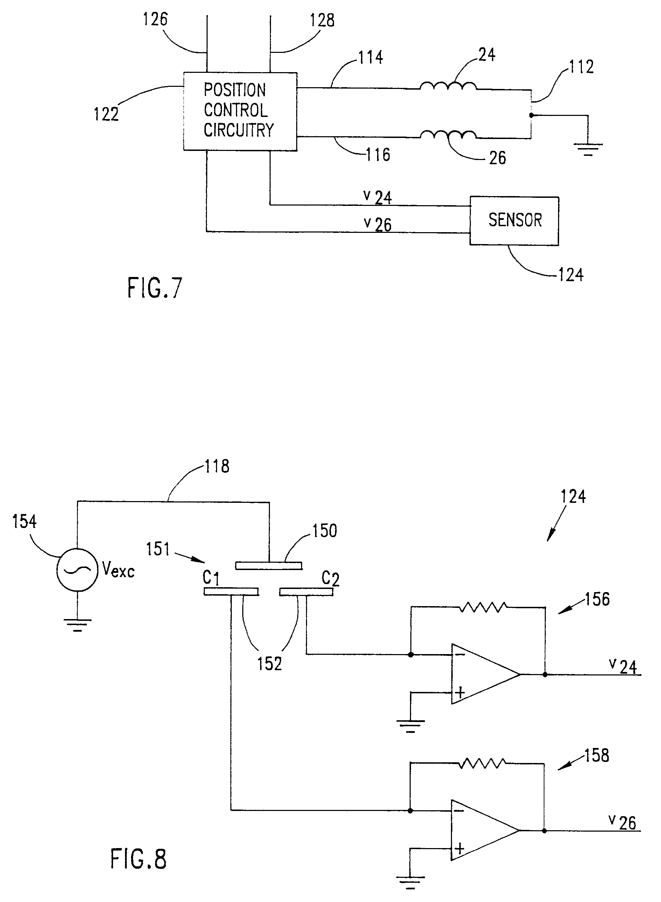

The preferred apparatus for controlling the motion of substrate 21 relative to base 10 will now be described with reference to Figs. 5-9. As shown in Fig. 7, the preferred apparatus comprises a position control circuitry 122 which receives, from a sensor 124, two feedback signals $v_{24}$ and $v_{26}$ representative of the present position of substrate 21 relative to base 10. Position control circuitry 122 further receives a tilt command control signal over a line 126, representative of the desired change in the angular scanning position of substrate 21 relative to base 10, and a vertical command control signal over a line 128, representative of the desired change in the vertical position of substrate 21 relative to base 10.

In response to these four received signals, position control circuitry 122 outputs a first driving current to coil 24 over a line 114, and a second driving current to coil 26 over a line 116. Lines 114 and 116 each schematically represent one of the electrical connections available to coils 24 and 26 via conductive pivot assemblies 30 and 32. Coils 24 and 26 are further connected to ground via a line 118, which schematically represents a third of the electrical connections available via conductive pivot assemblies 30 and 32.

A first component of the driving currents provides currents in opposite directions to coils 24 and 26. As will be appreciated, opposite currents will cause equal and opposite forces to arise between coil 24 and magnet 40, and between coil 26 and magnet 42, which will in turn cause substrate 21 to pivot about pivot assemblies 30 and 32 until it reaches the equilibrium tilt position representative of this component.

Similarly, a second component of the driving currents provides currents in the same direction to coils 24 and 26. As will be appreciated, equal currents will cause equal forces to arise between coil 24 and magnet 40, and between coil 26 and magnet 42, which will in turn cause substrate 21 to move vertically until it reaches the equilibrium height above base 10 representative of the identically directed currents.

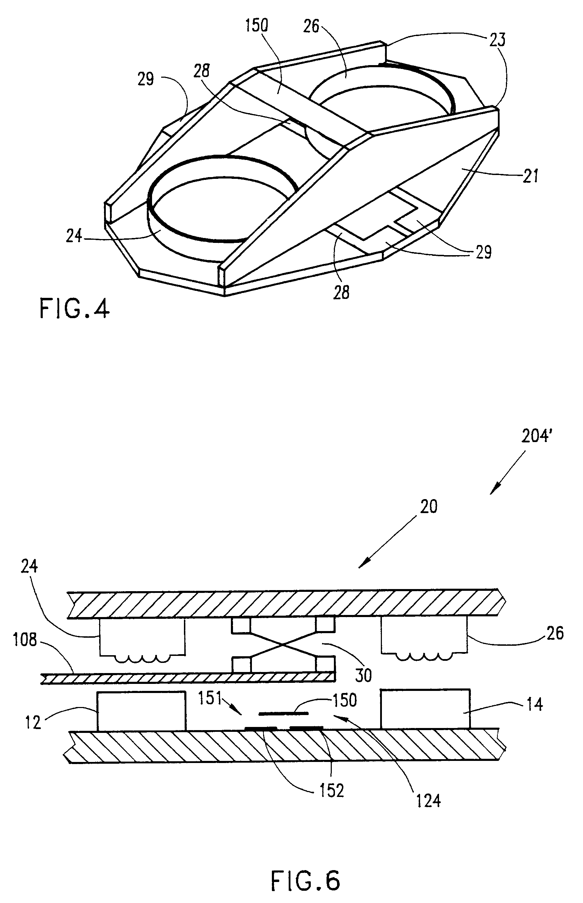

Reference is now made to Figs. 5, 6, and 8 which show a preferred embodiment of sensor 124. As shown in Figs. 5 and 6, sensor 124 includes a differential capacitor 151 comprising a plate 150 attached to the back side of substrate 21, and a split conducting plate 152 attached to base 10. When assembly 20 moves or tilts as described above, the capacitance between plate 150 and the respective portions of split plate 152 changes. This change in capacitance is measured by capacitance measurement circuitry, as, for example, the circuitry shown in Fig. 8.

As shown in Fig. 8, an oscillating voltage source 154 supplies a high frequency carrier signal to plate 150 via a line 118, which schematically represents the fourth electrical connection available on substrate 21 via conductive pivot assemblies 30 and 32. A pair of amplifiers 156 and 158 measures and amplifies the resulting modulated oscillating signals at the respective portions of split conducting plate 152, to form the two voltage signals $v_{24}$ and $v_{26}$. The capacitance measurement circuitry shown in Fig. 8 can be located in any convenient location, for example, on base 10. While a particular method of capacitively measuring the position of mirror assembly 20 has been described, it will be appreciated by those skilled in the art that other methods could be employed, for example, the methods described in applicant's Israel patent application serial no. 102,485, entitled "Scanning Apparatus".

As will be appreciated, the magnitude $V_{24}$ of voltage signal $v_{24}$, and the magnitude $V_{26}$ of voltage signal $v_{26}$, are functions of the capacitance of sections , respectively, are functions of the capacitance of differential capacitor 151 ($c_1$ and $c_2$). Therefore, since $c_1$ and $c_2$ are inversely related to the dista between plate 150 and the respective portions of split plate 152, the parameter:

$$V_v = 1/(V_{24} + V_{26})$$

is representative of the vertical position of substrate 21 relative to base 10, and the voltage:

$$V_t = V_{24} - V_{26}$$

is representative of the angular orientation of substrate 21 relative to base 10.

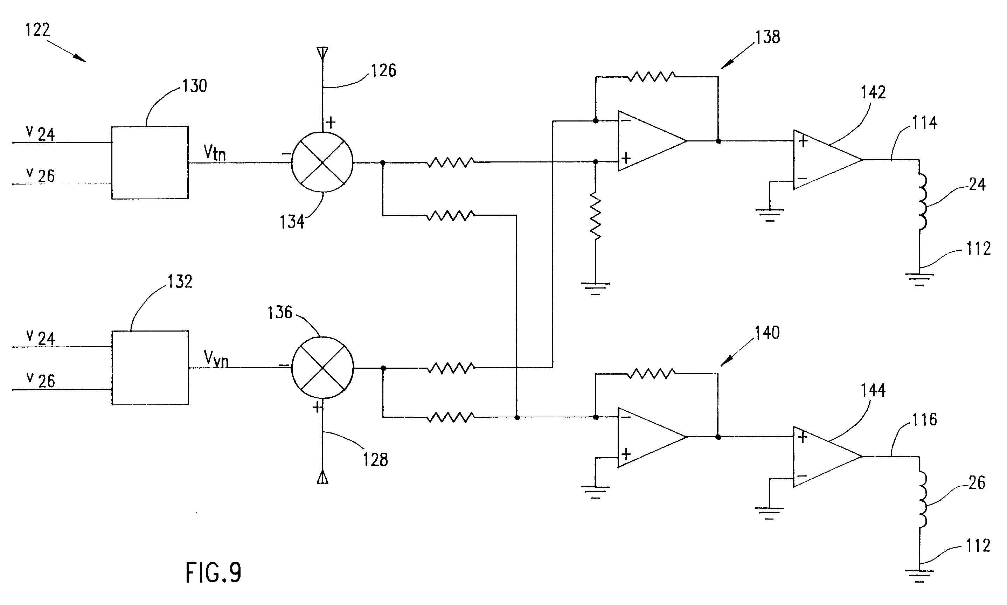

Reference is now made to Fig. 9, which shows a circuit diagram of a preferred embodiment of position control circuitry 122. The circuitry shown in Fig. 9 can be located in any convenient location, for example, on base 10. As mentioned above, position control circuitry 122 outputs a two component driving signal, comprising an oppositely directed component and an identically directed component. As shown in Fig. 9, the portion of position control circuitry 112 which generates the oppositely directed component comprises a first controller 130 which receives feedback signals $v_{24}$ and $v_{26}$, demodulates them to find the magnitudes $V_{24}$ and $V_{26}$, and forms a voltage $V_{tn}$, which is a normalized version of $V_t$ ($V_{tn} = f(V_t, V_{24}, V_{26})$). As will be appreciated, it is necessary to form a normalized version of $V_t$, because for a given degree of tilt, voltage $V_t$ will vary depending on the height of mirror assembly 20 above base 10. Normalized voltage $V_{tn}$, therefore, provides a height independent measure of the present tilt of mirror assembly 20.

A voltage subtracter 134 receives $V_{tn}$ and subtracts it from any tilt command signals on line 126 (representative of any desired change in the tilt), thus yielding a voltage signal representative of the new desired tilt of mirror assembly 20.

This voltage is provided to the non-inverting input of a first amplifier 138 and to the inverting input of a second amplifier 140, thus generating two opposite versions of the voltage signal. The two signals are fed to buffer amplifiers 142 and 144, and the buffered versions of the signals are supplied to coils 24 and 26, which causes mirror assembly 20 to tilt to the new position represented by the buffered oppositely directed voltage signals.

It will be appreciated that in the absence of any tilt command signals on line 126, the voltage signal provided by subtracter 134 will cause the tilt of mirror assembly 20 to remain unchanged.

The portion of position control circuitry 112 which generates the identically directed component of the driving currents comprises a second controller 132 which receives feedback signals $v_{24}$ and $v_{26}$, demodulates them to find the magnitudes $V_{24}$ and $V_{26}$, and forms a voltage $V_{vn}$, which is a normalized version of $V_v$ ($V_{vn} = f(V_v, V_{24}, V_{26})$). As in the oppositely directed current generation, it is necessary to form a normalized version of $V_v$, because for a given height above base 10, voltage $V_v$ will vary depending on the tilt of mirror assembly 20. Normalized voltage $V_{vn}$, therefore, provides a tilt independent measure of the present height of mirror assembly 20.

A voltage subtracter 136 receives $V_{vn}$ and subtracts it from any vertical command signals on line 126 (representative of any desired change in the height), thus yielding a voltage signal representative of the new desired height of mirror assembly 20.

This voltage is provided to the inverting input of a first amplifier 138 and to the inverting input of a second amplifier 140, thus generating two identical versions of the voltage signal. The two signals are fed to buffer amplifiers 142 and 144, and the buffered versions of the signals are supplied to coils 24 and 26, which causes mirror assembly 20 to move to the new height represented by the buffered identically directed voltage signals.

It will be appreciated that in the absence of any vertical move command signals on line 128, the voltage signal provided by subtracter 136 will cause the vertical position of mirror assembly 20 to remain unchanged.

It will be appreciated that since both the tilt position and the vertical position of scanner 204' can be controlled, that scanner 204' can be dynamically positioned throughout the line-by-line imaging of the target, so as to ensure that the light of each line of the target travels the same distance to reach detector 208'. This is achieved by providing a periodic tilt command driving signal on line 126, while simultaneously providing a periodic vertical command driving signal on line 128 which has the same period as the tilt command signal. Thus, as the periodic tilt command signal induces pivotal vibratory motion of mirror assembly 20, the periodic vertical command signal simultaneously induces vertical vibratory motion of mirror assembly 20 so as to maintain a constant distance between the target and detector 208', thereby assuring focusing of the target on the detector.

It will further be appreciated that since the vertical position of scanner 204' can be controlled, focusing of the scanner system can be achieved by adjusting the distance between the target and detector 208'. This is achieved by providing a non-periodic vertical command driving signal to position control circuitry 122 before scanning begins. Once set at the desired vertical position, feedback signals $v_{24}$ and $v_{26}$ will maintain scanner 204' at the new position, and the periodic vertical command signals received during the imaging of the target will induce vertical vibratory motion centered around the new position.

It will be appreciated by those skilled in the art that the present invention is not limited to what has been particularly shown and described hereinabove. While a preferred embodiment for implementing the invention has been described, many other embodiments for implementing the invention will occur to those of ordinary skill upon reading this disclosure. Therefore, the scope of the present invention is defined only by the following claims.

## Claims

1. Scanning apparatus, comprising:
   a scanning mirror; and
   a base,
   wherein the scanning mirror is pivotably mounted on a support which is linearly displaceable relative to the base.

2. The scanning apparatus of claim 1, further comprising:
   a variable magnetic field source, mounted on the underside of the scanning mirror; and
   a fixed magnetic field source, mounted on the base, and arranged for electromagnetic interaction with the variable magnetic field emitter.

3. The scanning apparatus of claim 2, further comprising:
   a mirror position sensor, which provides as output first and second present position signals representative of the present position of the scanning mirror; and
   position control circuitry, which receives as input the present position signals, and first and second command signals, and which provides as output first and second new position signals representative of a new desired position for the scanning mirror.

4. The scanner of claim 3, wherein the variable magnetic field emitter comprises at least one coil, and wherein the first and second new position signals energize the coil to generate the variable magnetic field.

5. The scanner according to either of claims 3 or 4, wherein the scanning mirror is mounted on the linearly displaceable support via at least one pivotable assembly, the pivotable assembly comprising a plurality of electrically conductive, mutually isolated segments,
   and whereas the first and second new position signals are transmitted to the variable magnetic field source via the at least one pivotable assembly.

6. The scanning apparatus according to any of claims 3-5, wherein the mirror position sensor comprises:
   a conductive element fixed to the mirror;
   first and second conductive elements fixed to the base;
   wherein the first and second present position signals are functionally related to the capacitance between the conductive element fixed to the mirror and the first and second conductive elements fixed to the base, respectively.

7. The scanning apparatus according to any of the claims 3-6, wherein the position control circuitry comprises:
   means for forming, from the first and second present position signals, a height independent value representative of the angular orientation of the scanning mirror relative to the base;
   means for combining the value representative of the angular orientation with one of the command signals, to form the first new position signal;
   means for forming, from the first and second position signals, a tilt independent value representative of the height of the scanning mirror relative to the base from the first and second present position signals; and
   means for combining the value representative of the height with the other of the command signals, to form the second new position signal.

8. Scanning apparatus, comprising:
   a scanning mirror having a front reflecting surface and a back surface;
   a base spaced from the scanning mirror by a distance;
   electromagnetic apparatus for deflection of the scanning mirror comprising:
   means for providing angular deflection of the mirror surface with respect to the fixed base; and
   means for adjusting the distance of the scanning mirror from the base.

9. The scanning apparatus of claim 8, wherein:
   the means for adjusting the distance of the mirror surface from the base comprises at least one cantilever; and

the means for providing angular deflection of the mirror surface comprises at least one flexible pivot mounted on said cantilever.

10. The scanning apparatus of claim 8, wherein the electromagnetic apparatus further comprises:

capacitive means for measuring the angular deflection of the mirror surface with respect to the fixed base, and for measuring the distance of the scanning mirror from the base;

said capacitive means comprising means for sensing the change in capacitance between at least one conductive element fixed to the mirror and at least one conductive element fixed to the base.

11. The scanning apparatus of claim 8, wherein the electromagnetic apparatus further comprises:

at least one magnet assembly mounted on the base;

at least one coil mounted on the back surface of the scanning mirror; and

means for energizing the at least one coil.

12. The scanning apparatus of any of claims 8-10, further comprising:

first and second magnet assemblies mounted on the base; and

first and second coils mounted on the back surface of the scanning mirror, positioned to interact with said first and second magnet assemblies respectively, when energized;

wherein the means for providing angular deflection of the mirror surface comprises means for oppositely energizing the first and second coils; and

the means for adjusting the distance of the scanning mirror from the base comprises means for identically energizing the first and second coils.

13. The scanning apparatus of any of claims 8-10, further comprising:

first and second magnet assemblies mounted on the base; and

first and second coils mounted on the back surface of the scanning mirror, positioned to interact with said first and second magnet assemblies respectively, when energized;

wherein the means for providing angular deflection of the mirror surface comprises means for providing a periodic, oppositely directed actuation of the first and second coils; and

the means for adjusting the distance of the scanning mirror from the base comprises means for simultaneously providing a periodic, identically directed actuation to the first and second coils;

wherein the period of the oppositely directed actuation and the identically directed actuation are related by a constant.

14. The scanning apparatus of claim 8, wherein the means for providing angular deflection comprises means for inducing pivotal vibratory motion of the scanning mirror with a certain period; and

the means for adjusting the distance from the base comprises means for simultaneously inducing linear vibratory motion of the scanning mirror in synchronism with the pivotal vibratory motion.

15. Scanning apparatus, comprising:

a scanning mirror; and

a base,

wherein the scanning mirror is pivotally and linearly displaceably mounted relative to the base.

EP 0 683 414 A1

FIG.2

FIG.1

PRIOR ART

FIG.3

FIG.5

EP 0 683 414 A1

FIG.4

FIG.6

FIG.7

FIG.8

13

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-1 362 282 (FARRINGTON ELECTRONICS INCORPORATED) <br> * page 2, line 26 - line 41 * | 1,15 | G02B26/08 |
| Y |  | 2-4,6,8, 10,11 |  |
| A |  | 5,7, 12-14 |  |
| X | CA-A-1 163 299 (NORTHERM TELECOM LIMITED) <br> * page 3, line 3 - line 14 * <br> * page 9, line 12 - line 14 * | 1,15 |  |
| X | US-A-3 797 908 (WARD ET AL.) <br> * column 1, line 12 - line 24 * | 1,15 |  |
| D,Y | EP-A-0 579 471 (STATE OF ISRAEL MINISTRY OF DEFENCE) <br> * the whole document * | 2-4,6,8, 10,11 |  |
| D,A |  | 5,7, 12-14 | TECHNICAL FIELDS SEARCHED (Int.Cl.6) <br><br> G02B <br> H04N |

The present search report has been drawn up for all claims

| Place of search | Date of completion of the search | Examiner |
|---|---|---|
| THE HAGUE | 23 August 1994 | Bequet, T |

EPO FORM 1503 03.82 (P04C01)